# EUROPEAN PATENT APPLICATION

(11) **EP 1 273 619 A1**
(43) Date of publication of application: **08.01.2003**
(21) Application number: 01116245.0
(22) Date of filing: 04.07.2001
(51) Int. Cl.: C08K 7/00, C08K 9/04, C08K 9/08

(54) **Composite compositions**

(71) Applicant: UCB S.A., 1070 Bruxelles (BE)
(72) Inventor: Van Den Bergen, Hugues, 1000 Brussels (BE)

(57) **Abstract**

There is described a composite composition comprising a layered mineral and at least one polymer precursor which is substantially miscible therewith;
characterised in that:
(i) the composition and/or polymer precursor are polymerisible by radiation to form a polymeric composition; and/or
(ii) the polymer precursor comprises a polymer obtained and/or obtainable by polymerisation with radiation.

Further described are composite compositions comprising a layered mineral and intercalated therein at least one polymer which is further polymerisable by radiation to form a polymeric network, such as a polymeric coating.

Processes for making the composites are also described

## Description

The present invention is directed toward radiation curable composite compositions comprising polymers with mineral materials. Such compositions are suitable for forming coatings. The coatings and/or compositions of the invention preferably comprise nano-sized minerals.

There is a continuing need for new materials exhibiting improved properties and which can be polymerised using radiation for example to form a coating as a thin or thick layer. Preferred methods to achieve radiation polymerisation comprise ultraviolet radiation and/or ionising radiation, such as gamma rays, X-rays or an electron beam.

Composite materials which comprise polymers with a mineral filler dispersed therein are well known. Recently interest has been shown in composites in which the minerals are nano-sized. It has already been proposed to incorporate layered minerals, such as clays or other inorganic fillers, into thermal cured polymer compositions to improve their mechanical and other properties.

Layered minerals typically comprise multi-layers of inorganic material (such as alumino-silicate platelets which typically exhibit an overall electric charge balanced by intercalated counter ions). If the individual layers (e.g. platelets) are completely separated to form dispersed mono-layers then the mineral is said to be exfoliated and exfoliated minerals are where the mineral layers are dispersed to the maximum extent.

A layered mineral refers to minerals which comprise a plurality of thin layers of mineral. The layers may be adjacent, mutually parallel layers (i.e. multi-layered) and/or fully dispersed in another medium. Layered material may exhibit order over short and/or long ranges. For example layers having long range order may comprise large homogenous areas of a particular polymorphic form (e.g. one or more amorphous, semi-crystalline, para-crystalline and/or crystalline form) in which adjacent layers are bound together. Layers having a short range order may comprise smaller dispersed structures such as individual or aggregate unbound layers in the form of for example particles (preferably which are non-spherically symmetric), platelets (e.g. flattened high aspect ratio particles), tactoids (ordered or disordered small aggregates of particles and/or platelets), aggregates thereof and/or mixtures thereof. Preferred layered materials used in the invention have short range order such as clays comprising platelets. Exfoliated minerals are layered minerals in which the layers are fully dispersed and thus are longer necessarily mutually parallel.

Intercalation denotes materials that are deposed in the space between adjacent mineral layers. As used herein an intercalated material also denotes material initially added between the material layers to swell the mineral and separate the layers but where the layers are now fully separated such that there are no longer parallel multi-layers or spaces therebetween and the composition is fully exfoliated. Thus exfoliation can be considered the upper limit of an intercalated material.

Nano-sized denotes that at least one linear dimension has a mean size of less than about one micron (1 µm = 1 x 10⁻⁶ m), more preferably less than 100 nanometres (1 nm = 1 x 10⁻⁹ m); most preferably from 0.1 nanometres to about 100 nanometres. Nano-sized materials exist with the nano-size in three dimensions (nano-particles), two dimensions (nano-tubes having a nano sized cross section, but indeterminate length) or one dimension (nano-layers having a nano-sized thickness, but indeterminate area). Preferred aspects of the present invention relate to minerals which comprise nano-layers. If nano-layer minerals are clays they may also be referred to herein as nanoclays.

A difficulty encountered in incorporating layered minerals in polymeric systems is their mutually immisciblity. Polymers such as the commonly used thermoplastic and thermoset polymers tend to have a hydrophobic character. Due to the charge on each layer the region between the two mineral layers has a more hydrophilic character. The most useful minerals have layers of nano-sized thickness and thus a small interlayer spacing. However intercalation polymer chains between the mineral layers is desired to achieve improved properties in the composite composition and/or also to swell the mineral and separate the layers to achieve complete exfoliation of the mineral within the polymer.

One method to alleviate the problem of immiscibility is to perform an ion exchange between ions in the sheets of the layered filler and ions of an organic character to make the filler more compatible with the polymeric matrix However in conventional water or solvent based coatings, this method requires that the water or solvent must be evaporated which make the process slow and expensive because heat has to be applied. Also with solvent based coatings this method is environmentally unfriendly as it generates undesirable volatile organic compounds.

The following prior art references disclose compositions of layered inorganic filler with thermally cured polymers which is well known. None of the compositions so described are (co)polymerisable by radiation or comprise ingredients obtained from (co)polymerisable by radiation.

WO 97/00910 (= EP 0833863) (Exxon) describes nanocomposites formed by emulsion polymerisation where the nano-composite comprises a nanocomposite latex, a solid nanocomposite of a layered silicate mineral intercalated with an emulsion polymer and blends of the solid nanocomposite with other polymers. The latex contains a (co)polymer that is formed from a free radical polymerisable olefinic monomer(s). These polymers are neither obtained by radiation curing nor capable of being further curing by radiation.

WO 98/56598 (Michelin) describes a barrier coating mixture especially suitable for use on tyres the coating containing a carrier liquid in which is dispersed (a) an elastomeric polymer preferably containing butyl groups; (b) a dispersed exfoliated layered filler having an aspect ratio greater than 25; and (c) at least one surfactant, wherein the solids content of the mixture is less than 30 % and the ratio of polymer (a) to filler (b) is between 20:1 and 1:1. These elastomers are not radiation curable.

WO 00/34393 (Eastman Chemical) describes nanocomposites comprising a matrix polymer (which is defined as a thermoplastic or thermosetting polymer in which clay is dispersed to form a nanocomposite), a functionalised polymer or oligomer and a clay material. These materials are made using a melt compounding process and are not radiation curable.

WO 00/69957 (Edison Polymer) describes a method for preparing nanocomposite compositions from matrix polymers and plate like silicate or silicone fillers to form intercalates and/or exfoliated fillers. The composition comprises both intercalates and exfoliates of the fillers through the use of a small amount of a swelling agent which enters into the spaces between the platelets of the filler to improve the compatibility of the filler with most matrix polymers. The swelling agents used are small mobile molecules, oligomers, and/or polymers which have good compatibility toward the filler with or without cation exchange. Preferred polymers contain 1) at least 90% by weight of repeat units from mono-olefins or vinyl acetates, 2) at least 50% by weight of repeat units from conjugated C₄₋₈dienes or C₈₋₁₂vinyl aromatic monomers, or 3) a polyester or polyamide. These polymers are not radiation curable and a swelling agent is required to incorporate them into the nanocomposite due to their large size.

WO 01/04050 (NOvTNO) describes a method for preparing a composition for coating, wherein a layered, inorganic filler is subjected to an ion exchange with a modifier, which modifier comprises at least two ionic groups, which groups are separated from each other by at least four atoms, and wherein the modified filer, together with a polymer, is dispersed in a diluent. Although this document mentions in passing that the polymer may be radiation curable (page 1, line 24), in fact the ionic modifier may interfere with the curing efficiency of a radiation curable polymer (notwithstanding assertions by the applicant that these fillers do not adversely effect curing as this believed to refer to thermal curing only). No examples are given in which the compositions are subsequently radiation cured which indicates that the author of this document has not appreciated the problem with radiation curing. The present invention does not require modification of the mineral as described in WO 01/0450 and the compositions of the present invention are cured efficiently by radiation.

WO 01/36528 (GEC) describes resin compositions which comprise an intimate admixture of at least one ionomeric polyester and at least one organoclay and these compositions are not radiation curable.

EP 0267341 (ECC International Ltd) describes compositions of polyester or epoxy resin, with a readily dispersible organoclay, the clay being prepared by (a) suspending a smectite clay in water to form an aqueous suspension; (b) treating the aqueous suspension with a solution of an inorganic salt of a cation with valency ≥ 2 at a concentration sufficient to flocculate the smectite clay; (c) mixing the flocculated suspension with a quaternary ammonium compound comprising at least one C₁₀₋₂₄alkyl group; and (d) removing the water. These compositions are not radiation curable.

EP 0791556 (Nippon Paint) describes a water-dispersible organic clay complex in which a quaternary ammonium ion having both an oxypropylene unit and an oxyethylene unit is present in interlamellar space of an expansible phyllosilicate. The complex is used for controlling the rheology of a water-based coating agent. The final compositions are not co-polymerisable by radiation indeed the document suggests adding a UV absorber (page 8, lines 16 to 18) to improve weather resistance of the coating which teaches away from curing the coating by UV radiation.

EP 1033724 (Alcatel) describes coatings for power cables, the coatings comprising a layered inorganic mineral oxide in the form of a clay and an organic compound comprising a polymer, monomer or oligomer. These coatings are not formed by radiation polymerisation.

EP 1055706 (Rheox) describes compositions formed from intercalates between a organic chemical and a smectite clay (that has been ion-exchanged and reacted and intercalated with one or more quarternary ammonium compounds and an anionic material). This material is then further blended into a variety of polymers, whether polar or non-polar, to make nanocomposite compositions of improved dispersivity. Preferred polymers comprise polyolefins, copolymers thereof; copolymers of olefins and ethylene vinyl acetate, ethylene acid copolymers, ethylene-vinyl alcohols, ethylene-ethyl acrylates, and ethylene-methyl acrylates. These compositions are not radiation curable and in compositions of the present invention modification of the mineral is not necessary to achieve compatibility with the polymer precursors .

US 5849830 (Cornell Research) describes nanocomposites manufactured by combining a host material (such as an organic solvent or a matrix polymer) with exfoliated intercalates formed by contacting a phyllosilicate with an intercalant adsorbed between adjacent phyllosilicate platelets. The intercalant is selected from (1) an N-alkenyl amide monomer and an allylic monomer; (2) an oligomer formed by co-polymerising an N-alkenyl amide monomer and an allylic monomer; (3) a polymer formed by co-polymerising an N-alkenyl amide monomer and an allylic monomer; and (4) mixtures thereof. Sufficient polymer is adsorbed between adjacent phyllosilicate platelets to expand the adjacent platelets to increase the spacing to at least about 10 Å (Angstrom units) so that the intercalate easily can be exfoliated to provide a carrier material for drugs and the like, or to provide a matrix polymer/platelet composite (nanocomposite) material the platelets being exfoliated from the intercalate. These nanocomposites are not radiation curable.

US 5554670 (AMCOL) describes a method of preparing layered silicate-epoxy nanocomposites by dispersing an organically modified smectite-type clay in an epoxy resin together with diglycidyl ether of bisphenol-A (DGEBA), and then curing in the presence of either nadic methyl anhydride (NMA), benzyldimethyl amine (BDMA), and/or boron trifluoride monoethylamine (BTFA) at 100°C to 200°C. These compositions are not radiation curable.

US 6156835 (Dow) describes a polymer composite comprising a hydroxy-phenoxyether or polyester polymer matrix having dispersed therein layers of an inorganic material derived from a multi-layered inorganic material having organophillic properties. The dispersion of the multi-layered inorganic material in the polymer matrix is such that an increase in the average interlayer spacing of the layered inorganic material occurs to a significant extent resulting in the formation of a nanocomposite. The polymers may be derived from a diglycidyl ether or ester or an epihalohydrin and a di-nucleophile such as a di-carboxylic acid, a di-functional amine, a bisphenol or a sulfonamide. Preferably the organophilic inorganic material clay is a mineral modified with organic ammonium compounds. These nanocomposites are not radiation curable.

DE 19821477 (BASF) describes thermoplastic nanocomposites useful for producing film, fibre, moulded articles or coatings, the nanocomposites containing (A) 50% to 99.99% by weight of a polymer of carbon monoxide and an olefinically unsaturated compound; (B) 0.01% to 50% by weight of a delaminated layer silicate; (C) 0 to 40% by weight of a fibrous filler; (D) 0 to 30% by weight of other additives; and (E) 0 to 30% by weight an elastomeric rubber polymer. These nanocomposites are not radiation curable.

The above describes prior art describe methods for uniting layered fillers and polymeric matrices which are bulk polymeric materials and coatings which are thermal cured. The particular difficulties involved with making radiation curable coatings and polymers compatible with layered minerals have not been addressed.

The following references disclose compositions which contain simple mixtures of UV curable polymers with layered minerals.

JP 01-266533-A (Sekisui Chem.) describes a layered mineral impregnated with a thermal hardening agent between the layers. The compositions which also comprise radiation curable monomers are used to make solder resists for printed circuits. However such compositions do not contain, and teach away from, minerals with intercalated radiation curable polymers.

JP 07-090229-A (Sekisui Chem.) describes a low viscosity UV curable mixture to form substrates for pressure sensitive adhesive tapes. The mixture comprises co-monomers of (meth)acrylate, polar monomer and unsaturated monomer; a photo-initiator; and a hydrophobic modified clay. There is no teaching in this document that the clay is intercalated with polymer or exfoliated or how this may be achieved. It is likely that the clay is simply dispersed as agglomerates in the UV cured copolymer especially if the clay is hydrophobic and the copolymer has polar groups.

CAS 130:125719; Supramol. Sci. (1998), (3-4), pp 303-308; Dept. of Cryst. Mat. Sci., Grad. School of Eng., Nagoya Univ, Chikusa, Japan; describes a nanoclay with cationic layers in which a 4-vinylbenozate or 4-benzoyl benzoate anions are intercalated therein to form the counter ion. These anions are then UV irradiated to cyclodimerise and then undergo radical polymerisation to form an intercalated non cross-linked linear polymer. These counter ions are small and non polymeric and so are directly compatible with the clay. This reference does not teach how much larger oligomers could be intercalated into a clay to form radiation curable mineral composites suitable for forming coatings comprising polymeric networks.

Thus these prior art references do not describe methods for preparing radiation curable polymer networks in which the polymers are intercalated in the layered mineral and/or the mineral is fully exfoliated. The particular difficulties involved with making radiation curable coatings and polymers compatible with layered minerals have not been addressed or adequately resolved by the prior art.

It is an object of the invention to provide a composition and/or coating which solves some or all the problems with prior art mineral -polymer composite compositions.

Broadly one aspect of the invention comprises a composite composition comprising a layered mineral and at least one polymer precursor which is substantially miscible therewith; characterised in that:
(i) the polymer precursor is polymerisible by radiation to form a polymeric composition; and/or
(ii) the polymer precursor comprises a polymer obtained and/or obtainable by polymerisation with radiation.

Preferably the polymer precursor is both polymerisible by radiation and the polymer precursor is a polymer obtainable and/or obtained by radiation polymerisation.

Preferably the layered mineral is intercalated (preferably exfoliated) with the polymer precursor.

Broadly in accordance with another aspect of the invention there is provided a composite composition comprising a layered mineral and intercalated therein at least one polymer which is further polymerisable by radiation to form a polymeric network, such as a polymeric coating.

A yet another aspect of the invention provides a composite composition obtained and/or obtainable by radiation polymerisation of a composite composition as described herein

The coatings and/or composites of the invention may preferably impart and/or exhibit resistance to attack such as an improved resistance to mechanical and/or chemical attack. For example they may be impart improved flame retardancy, heat resistance, abrasion resistance, scratch resistance, barrier properties, outdoor resistance, mechanical properties and/or combinations of any of these properties.

Preferred minerals comprise nano-layers and/or clays, more preferably comprise nanoclays.

Preferably the mineral is present in the composite in an amount from about 1% to about 5% by total weight of the composition.

The compatibility of the radiation cured polymer (oligomer) with the layered mineral to achieve intercalation of the mineral may be achieved in several ways.

One method is to ion exchange the counter ion in the mineral with an ion comprising larger more hydrophobic groups thereon. The hydrophobic radiation curable oligomer may then be intercalated within the mineral layers by adsorption within the more compatible (more hydrophobic) inter layer spaces as a simple physical blend with the counter ion.

Another method is to also use an (ion exchanged) counter ion which is more hydrophobic but also comprises reactive functional groups thereon which will react with the oligomer to form a radiation curable oligomeric counter ion. After radiation curing, the polymers are bound to the mineral layer by ionic charge. The same effect can also be achieved by direct addition of a radiation curable polymeric counter ion which is intercalated in the mineral provided that such a counter ion can readily ion exchange with the mineral and is compatible therewith.

In a still further method the mineral layers are chemically modified directly by covalent bonded organo groups thereon (e.g. through the silane bonds to silicates) which increase the compatibility of the mineral with the oligomer. Optionally the layers may be modified to remove or substantially reduce their net electric charge to reduce the number of inter layer counter ions, which also improves hydrophobicity. As the first method, the oligomer is absorbed with the mineral layers as a simple physical blend.

The yet other method uses a mineral in which the layers are chemically modified by covalent bonded organo groups thereon, where the groups are reactive with the oligomer to form a radiation curable oligomeric chain covalently attached to the layer in the inter layer space. After radiation curing, the polymers are bound to a mineral layer by a covalent charge.

It will be appreciated that these methods can be combined for example both the mineral layer and the counter ion can be modified to improve compatibility and/or reactivity with the oligomer. Although nano-layered materials are preferred it is possible that layered minerals could be prepared which are larger than nano-sized with improved properties especially if the modifying agent is novel.

Organo modified minerals and/or counter ions can be made inexpensively such that the swollen and/or modified minerals may be used with conventional radiation curable polymers which need no other treatment to allow intercalation (including exfoliation) between mineral layers. The present invention allows layered minerals and radiation curable polymers to be homogeneously dispersed to form improved composites. The composites may then be radiation cured to form improved coatings.

A nano-composite material is used herein to refer to a material which comprises a plurality of phases at least one of which is nano-sized, for example a mixture of a nano-layer mineral (e.g. nano-clay) intercalated with a radiation curable polymer as described herein .

Advantageously the layered mineral comprises a natural or synthetic mineral, more advantageously the mineral comprises minerals based on layered silicates (such as layered phyllosilicate) and for example which comprise magnesium and/or aluminum silicate layers each having a thickness usefully from about 7 Å about 12 Å. However any natural or synthetic layered mineral (preferably which can be intercalated) may be used in the present invention.

Thus layered mineral used in the present invention may comprise a clay such as any of the following which are suitable:
kaolins, such as kaolinite, dickite, nacrite; halloysite (7Å) and/or halloysite (10Å);
serpentines, such as lizardite, chrysotile, antigorite, carlosturanite, forsterite, asbestos, amestite, cronstedite, chamosite, berthierine, and/or garnierite;
talcs, pyrophyllites, and/or ferropyrophyllites;
smectites and/or montmorillonites; such as bentonite; beidellite, nontronite, hectrorite, fluorohectorite, saponite, sauconite; volkhonskoite, medmontite, pimelite, stevensite and/or stephanite;
illites and/or micas such as muscovite, bravaisite, degraded mica, hydromica, hydromuscovite, hydrous illite, hydrous mica, K-mica, micaecous, clay and/or sericite;
glauconites such as caledonia;
chlorites and/or vermiculites such as clinochlore, chamosite, nimite, baileychlore, donbassite, cookite, sudoite, franklinfurnaceite and/or corrensite;
palygorskites and/or sepiolites such as attapulgite;
mixed layer minerals which may comprise two three or more mineral components in random and/or regular order, examples of such mixed layer minerals comprising pillared clays, illite-montmorillonite, smectite-illite, illite-chlorite-smectite and/or illite-smectite-vermiculite;
amorphous clays such as allophane and/or imogolite, and/or
high alumina clays such as diaspore, boehmite, gibbsite, cliachite, bauxite, bauxitic kaolin and/or bauxitic clays;
other clays such as fire clay, flint clay, nodular clay, burley clay, abrasive clay, loess and/or abobe. and/or any suitable mixtures and combinations thereof.

Preferred clays for use in the present invention comprise kaolins, smectites chlorites, vermiculites, combinations and/or mixtures thereof; more preferably are selected from one or more: montmorillonite, saponite, hectorite, fluorohectorite, beidellite, nontronite, vermiculite, halloysite, stevensite and/or stephanite; most preferably montmorillonite.

The layered mineral used in the invention can be both cationic and anionic in nature. In principle, any anionic or cationic mineral obtained synthetically or from a natural source can be used. A suitable clay type preferably has a cation exchange capacity of 30 to 250 milli-equivalents per 100 grams. Preferably, a clay is used having a cation exchange capacity of from 50 to 200 milli-equivalents per 100 grams.

Another layered mineral that can be used in the invention is a layered double hydroxide (LDH). This material is a so-called anionic clay, consisting of small crystalline sheets of dimensions of a few nanometres, between which anions are located. By these anions are meant anions other than hydroxyl groups. A layered double hydroxide can be both natural and synthetic in nature. Methods for preparing synthetic LDH are described in US. 3,539,306 and US 3,650,704 the contents of which are hereby incorporated by reference. Preferably the LDH has a large contact surface and an ion exchange capacity of 0.5 to 6 milli-equivalents per gram. More preferred LDHs are hydrotalcite or hydrotalcite-like materials which can be easily prepared synthetically, while the desired properties can be eminently controlled.

Preferably the radiation curable polymer has a number average molecular weight (Mₙ) of less than about 10,000 daltons, more preferably from about 300 to about 5,000 daltons most preferably from about 500 to less than about 3,000 daltons.

The radiation curable polymer may be an oligomer and may itself be obtained and/or obtainable by radiation polymerisation. The radiation curable polymer may comprise any that are well known as conventional in radiation curable compositions, and for example may comprise at least one group selected from an activated unsaturated moiety and/or a (thio)ether moiety.

Because the preferred oligomers are much smaller than the bulk polymers used in the prior art thermally cured mineral and polymer mixtures, there is less of an issue in terms of compatibility between the mineral layers and oligomers.

Optionally the radiation curable polymer is not obtained by emulsion polymerisation method, is not a emulsion polymer latex, is not an ionomer and/or is not further polymerisable by an emulsion polymerisation method.

Preferably the polymer comprises at least one oligomer having radiation polymerisable double bonds (optionally by well known processes such as free radical and/or cationic mechanisms) such as (meth)acrylated oligomers comprising for example ester, urethane, ether, silicon, halogen and/or phosphorus groups.

More preferred oligomers comprise: copolymers with (meth)acrylate group(s) and one or more (poly)ol, (poly)urethane; (poly)ester; (poly)ether, (poly)epoxy, (poly)amino, (poly)silicone, poly(meth)acrylate, phosphorus-containing moeties, silicon-containing moieties halogen-containing moieties; organic-inorganic hybrid materials; and/or combinations thereof any of which are radiation curable (preferably radical polymerisable).

Organic-inorganic hybrid materials are understood to be materials which are built up from a combination of polymeric organic and inorganic/ceramic components which are mutually chemically bonded on a molecular level, which may further contain inorganic nano-particles dispersed therein. The composition of the present invention may also further blended with one or more further polymer precursors (which may be the same or different to those intercalated in the mineral layer) to form a blend of polymer precursor and the composition. Preferably the amount of the composition in the blend is from about 0.1 % to about 70% by weight of the total blend.

Preferred compositions of the invention are substantially free of organic solvents as no solvents are used to prepare the compositions (other than optionally water) or in the curing process which preferably used UV or EB radiation.

These coating compositions, beside having improved properties have several other advantages for example the energy required to cure is low as no organic solvent have to be evaporated, the cure speed is high and they are environmentally friendly because they have a very low emission of volatile organic compounds (also denoted herein by the term "VOC").

Compositions of the invention may be applied to an article and cured in situ by radiation (e.g. UV radiation in presence of a photo-initiator or by electron beam radiation) to form a coating thereon having improved properties.

Optionally the layered mineral is intercalated with a counter ion which is compatible with the radiation cured polymer. Preferred minerals comprise anionic mineral layers (e.g. alumino-silicate) intercalated with hydrophobic counter cations.

Optionally the counter ion comprises at least one hydrophobic group such as a C_{>12}hydrocarbo group.

Optionally the counter ion comprise at least one group capable of reacting with the radiation curable polymer to form a covalent bond thereto such that the reaction product is a radiation curable polymeric counter ion.

Preferred counter cations comprise optionally substituted organo onium cations, more preferably those represented by the formulae

⁺(MR¹R²R³R⁴) ; and/or ⁺(PyR⁴);

where
M is nitrogen, sulphur or phosphorus;
R¹, R², R³, and R⁴ independently denote hydrogen or an optionally substituted hydrocarbo group, preferably H or hydrocarbyl, more preferably H or alkyl, aryl or allyl group, most preferably at least one of which is other than hydrogen; and
Py denotes a pyridinium or an alkyl substituted pyridinium group.

Preferred reactive groups on the counter ion comprise any group which is capable of reacting with the radiation curable polymers described herein to form a covalent bond thereto without significantly effecting the polymers ability to be polymerised by radiation. The counter ion may advantageously comprise as a reactive group an olefinically unsaturated bond, which may be in the terminal position.

Alternatively the counter ion may itself already be polymerisable by radiation (i.e. also forms the polymer component).

Optionally the layered mineral may be modified with an agent to make the mineral more organophillic and thus improve its compatibility with the polymer. For example the mineral layer may be modified by moieties which covalently bind to the silicate groups and comprise hydrophobic groups. The mineral may also be modified by attaching thereon the same groups which are capable of covalently bonding to the radiation curable polymer such that after reacting with the polymer the mineral layer has attached thereto a radiation curable polymer . Preferred reactive groups are as described above.

Thus it is preferred that before mixing with the polymer the layered mineral used herein is first subjected to an ion exchange by addition of a swelling agent and/or the mineral is organo modified using a modifying agent.

The swelling agent comprises at least one counter ion as described herein. If the swelling agent comprises an onium salt, preferred anions are selected from halide, hydroxy, nitrate, and/or sulphate. Preferred swelling agents comprise quaternised and/or protonated radiation curable amino acrylate oligomers which are both the counter ion and the radiation curable polymer.

The modifying agent comprises at least one group as described herein which is hydrophobic and/or is capable of reacting with the radiation curable polymer as described above.

As the preferred polymers intercalated herein are small species of a low molecular weight (e.g. compared to the more hydrophobic polymers used to prepare prior art thermally cured nanocomposites) the use of both a modified counter ion and/or modified mineral layer is not essential to incorporate these polymers in the layered mineral to form the radiation curable composites of the invention and only one of these treatments may be necessary.

The modifying and/or swelling agents may further comprise dye to give the composition a desired colour. Suitable are cationic and anionic dyes and dyes which can be brought into cationic or anionic form by protonating or deprotonating. These are, for instance, dyes with N⁺, P⁺, S⁺ functionalities and/or derivatives thereof. Additionally preferred are dyes with anionic functionalities such as RCO₂⁻, RP(O)O₂²⁻ and RSO₃⁻, wherein R denotes an alkyl, aryl or alkylaryl group. Also preferred are dyes where the charge is divided over different functional groups. Examples of suitable dyes are mentioned inter alia in Ullmanns Encyklopadie der technische Chemie, band 11, Verlag Chemie, Weinheim,1976 under "Farbstoffen".

Throughout this specification, the term "activated unsaturated moiety" "is used to denote an species comprising at least one unsaturated carbon to carbon double bond in chemical proximity to at least one activating moiety. Preferably the activating moiety comprises any group which activates an ethylenically unsaturated double bond for addition thereon by a suitable electrophillic group.

Conveniently the activating moiety comprises oxy, thio, (optionally organo substituted)amino, thiocarbonyl and/or carbonyl groups (the latter two groups optionally substituted by thio, oxy or (optionally organo substituted) amino). More convenient activating moieties are (thio)ether, (thio)ester and/or (thio)amide moiet(ies). Most convenient "activated unsaturated moieties" comprise an "unsaturated ester moiety" which denotes an organo species comprising one or more "hydrocarbylidenyl(thio)carbonyl(thio)oxy" and/or one or more "hydrocarbylidenyl(thio)-carbonyl(organo)amino" groups and/or analogous and/or derived moieties for example moieties comprising (meth)acrylate functionalities and/or derivatives thereof. "Unsaturated ester moieties" may optionally comprise optionally substituted generic α,β-unsaturated acids, esters and/or other derivatives thereof including thio derivatives and analogs thereof.

Preferred activated unsaturated moieties are those reoresented by Formula 1'. 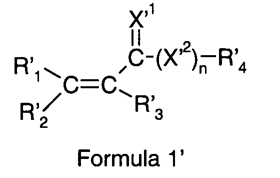 where
n' is 0 or 1,
X'¹ is oxy or, thio
X'² is oxy, thio or NR'₅ (where R'₅ represents H or optionally substituted organo),
R'₁, R'_{2,} R'₃ and R'₄ each independently represent H, optionally substituents and/or optionally substituted organo groups; and
all suitable isomers thereof, combinations thereof on the same species and/or mixtures thereof.

It will be appreciated that the terms "activated unsaturated moiety"; "unsaturated ester moiety" and/or Formula 1' herein may represent a discrete chemical species (such as a compound, ion, free radical, oligomer and/or polymer) and/or any part(s) thereof. Thus Formula 1' may also represent multivalent (preferably divalent) radicals. Thus the options given herein for n', X'¹, X'², R'_{1,} R'_{2,} R'₃, R'₄ and R'₅, also encompass corresponding bi or multivalent radicals as appropriate.

More preferred moieties of Formula 1' (including isomers and mixtures thereof) are those where n' is 1; X'¹ is O; X'² is O, S or NR'₅;
R'₁, R'_{2,} R'₃, and 'R₄ are independently selected from: H, optional substituents and optionally substituted C₁₋₁₀hydrocarbo, and
where present R'₅ is selected from H and optionally substituted C₁₋₁₀hydrocarbo.

Most preferably n' is 1, X'¹ is O; X'² is O or S and R'₁, R'_{2,} R'₃ and R'₄ are independently H, hydroxy and/or optionally substituted C_{1□6}hydrocarbyl.

For example n' is 1, X'¹ and X'² are both O; and R'₁, R'_{2,} R'₃ and R'₄ are independently H, OH, and/or C₁₋₄alkyl.

For moieties of Formula 1' where n' is 1 and X'¹ and X'² are both O then:
when one of (R'₁ and R'₂) is H and also R'₃ is H, Formula 1' represents an acrylate moiety, which includes acrylates (when both R'₁ and R'₂ are H) and derivatives thereof (when either R'₁ or R'₂ is not H). Similarly when one of (R'₁ and R'₂) is H and also R'₃ is CH₃, Formula 1' represents an methacrylate moiety, which includes methacrylates (when both R'₁ and R'₂ are H) and derivatives thereof (when either R'₁ or R'₂ is not H). Acrylate and/or methacrylate moieties of Formula 1' are particularly preferred.

Conveniently moieties of Formula 1' are those where n' is 1; X'¹ and X'² are both O; R'₁ and R'₂ are independently H, methyl or OH, and R'₃ is H or CH₃.

More conveniently moieties of Formula 1' are those where n' is 1; X'¹ and X'² are both O; R'₁ is OH, R'₂ is CH₃, and R'₃ is H, and/or tautomer(s) thereof (for example of an acetoacetoxy functional species).

Most convenient unsaturated ester moieties are selected from: -OCO-CH=CH₂; -OCO-C(CH₃)=CH₂; acetoacetoxy, -OCOCH=C(CH₃)(OH) and all suitable tautomer(s) thereof.

It will be appreciated that any suitable moieties represented by Formula 1' could be used in the context of this invention such as other reactive moieties.

Unless the context clearly indicates otherwise, as used herein plural forms of the terms herein are to be construed as including the singular form and vice versa.

The term "comprising" as used herein will be understood to mean that the list following is non-exhaustive and may or may not include any other additional suitable items, for example one or more further feature(s), component(s), ingredient(s) and/or substituent(s) as appropriate.

The terms 'effective', 'acceptable' 'active' and/or 'suitable' (for example with reference to any process, use, method, application, preparation, product, material, formulation, compound, monomer, oligomer, polymer precursor, and/or polymers of the present invention and/or described herein as appropriate) will be understood to refer to those features of the invention which if used in the correct manner provide the required properties to that which they are added and/or incorporated to be of utility as described herein. Such utility may be direct for example where a material has the required properties for the aforementioned uses and/or indirect for example where a material has use as a synthetic intermediate and/or diagnostic tool in preparing other materials of direct utility. As used herein these terms also denote that a functional group is compatible with producing effective, acceptable, active and/or suitable end products.

Preferred utility of the present invention comprises imparting resistance to attack for example as described herein

The terms 'optional substituent' and/or 'optionally substituted' as used herein (unless followed by a list of other substituents) signifies the one or more of following groups (or substitution by these groups): carboxy, sulpho, formyl, hydroxy, amino, imino, nitrilo, mercapto, cyano, nitro, methyl, methoxy and/or combinations thereof. These optional groups include all chemically possible combinations in the same moiety of a plurality (preferably two) of the aforementioned groups (e.g. amino and sulphonyl if directly attached to each other represent a sulphamoyl group). Preferred optional substituents comprise: carboxy, sulpho, hydroxy, amino, mercapto, cyano, methyl, halo, trihalomethyl and/or methoxy.

The synonymous terms 'organic substituent' and "organic group" as used herein (also abbreviated herein to "organo") denote any univalent or multivalent moiety (optionally attached to one or more other moieties) which comprises one or more carbon atoms and optionally one or more other heteroatoms. Organic groups may comprise organoheteryl groups (also known as organoelement groups) which comprise univalent groups containing carbon, which are thus organic, but which have their free valence at an atom other than carbon (for example organothio groups). Organic groups may alternatively or additionally comprise organyl groups which comprise any organic substituent group, regardless of functional type, having one free valence at a carbon atom. Organic groups may also comprise heterocyclyl groups which comprise univalent groups formed by removing a hydrogen atom from any ring atom of a heterocyclic compound: (a cyclic compound having as ring members atoms of at least two different elements, in this case one being carbon). Preferably the non carbon atoms in an organic group may be selected from: hydrogen, halo, phosphorus, nitrogen, oxygen, silicon and/or sulphur, more preferably from hydrogen, nitrogen, oxygen, phosphorus and/or sulphur.

Most preferred organic groups comprise one or more of the following carbon containing moieties: alkyl, alkoxy, alkanoyl, carboxy, carbonyl, formyl and/or combinations thereof; optionally in combination with one or more of the following heteroatom containing moieties: oxy, thio, sulphinyl, sulphonyl, amino, imino, nitrilo and/or combinations thereof. Organic groups include all chemically possible combinations in the same moiety of a plurality (preferably two) of the aforementioned carbon containing and/or heteroatom moieties (e.g. alkoxy and carbonyl if directly attached to each other represent an alkoxycarbonyl group).

The term 'hydrocarbo group' as used herein is a sub-set of a organic group and denotes any univalent or multivalent moiety (optionally attached to one or more other moieties) which consists of one or more hydrogen atoms and one or more carbon atoms and may comprise one or more saturated, unsaturated and/or aromatic moieties. Hydrocarbo groups may comprise one or more of the following groups. Hydrocarbyl groups comprise univalent groups formed by removing a hydrogen atom from a hydrocarbon (for example alkyl). Hydrocarbylene groups comprise divalent groups formed by removing two hydrogen atoms from a hydrocarbon, the free valencies of which are not engaged in a double bond (for example alkylene). Hydrocarbylidene groups comprise divalent groups (which may be represented by "R₂C=") formed by removing two hydrogen atoms from the same carbon atom of a hydrocarbon, the free valencies of which are engaged in a double bond (for example alkylidene). Hydrocarbylidyne groups comprise trivalent groups (which may be represented by "RC="), formed by removing three hydrogen atoms from the same carbon atom of a hydrocarbon the free valencies of which are engaged in a triple bond (for example alkylidyne). Hydrocarbo groups may also comprise saturated carbon to carbon single bonds (e.g. in alkyl groups); unsaturated double and/or triple carbon to carbon bonds (e.g. in respectively alkenyl and alkynyl groups); aromatic groups (e.g. in aryl groups) and/or combinations thereof within the same moiety and where indicated may be substituted with other functional groups

The term 'alkyl' or its equivalent (e.g. 'alk') as used herein may be readily replaced, where appropriate and unless the context clearly indicates otherwise, by terms encompassing any other hydrocarbo group such as those described herein (e.g. comprising double bonds, triple bonds, aromatic moieties (such as respectively alkenyl, alkynyl and/or aryl) and/or combinations thereof (e.g. aralkyl) as well as any multivalent hydrocarbo species linking two or more moieties (such as bivalent hydrocarbylene radicals e.g. alkylene).

Any radical group or moiety mentioned herein (e.g. as a substituent) may be a multivalent or a monovalent radical unless otherwise stated or the context clearly indicates otherwise (e.g. a bivalent hydrocarbylene moiety linking two other moieties). However where indicated herein such monovalent or multivalent groups may still also comprise optional substituents. A group which comprises a chain of three or more atoms signifies a group in which the chain wholly or in part may be linear, branched and/or form a ring (including spiro and/or fused rings). The total number of certain atoms is specified for certain substituents for example C_{1-N}organo, signifies a organo moiety comprising from 1 to N carbon atoms. In any of the formulae herein if one or more substituents are not indicated as attached to any particular atom in a moiety (e.g. on a particular position along a chain and/or ring) the substituent may replace any H and/or may be located at any available position on the moiety which is chemically suitable and/or effective.

Preferably any of the organo groups listed herein comprise from 1 to 36 carbon atoms, more preferably from 1 to 18. It is particularly preferred that the number of carbon atoms in an organo group is from 1 to 12, especially from 1 to 10 inclusive, for example from 1 to 4 carbon atoms.

As used herein chemical terms (other than IUAPC names for specifically identified compounds) which comprise features which are given in parentheses - such as (alkyl)acrylate, (meth)acrylate and/or (co)polymer - denote that that part in parentheses is optional as the context dictates, so for example the term (meth)acrylate denotes both methacrylate and acrylate.

The substituents on the repeating unit of a polymer and/or oligomer may be selected to improve the compatibility of the materials with the polymers and/or resins in which they may be formulated and/or incorporated for the uses described herein. Thus the size and length of the substituents may be selected to optimise the physical entanglement or interlocation with the resin or they may or may not comprise other reactive entities capable of chemically reacting and/or cross-linking with such other resins as appropriate.

Certain moieties, species, groups, repeat units, compounds, oligomers, polymers, materials, mixtures, compositions and/or formulations which comprise and/or are used in some or all of the invention as described herein may exist as one or more different forms such as any of those in the following non exhaustive list: stereoisomers (such as enantiomers (e.g. E and/or Z forms), diastereoisomers and/or geometric isomers); tautomers (e.g. keto and/or enol forms), conformers, salts, zwitterions, complexes (such as chelates, clathrates, crown compounds, cyptands / cryptades, inclusion compounds, intercalation compounds, interstitial compounds, ligand complexes, organometallic complexes, non-stoichiometric complexes, π-adducts, solvates and/or hydrates); isotopically substituted forms, polymeric configurations [such as homo or copolymers, random, graft and/or block polymers, linear and/or branched polymers (e.g. star and/or side branched), cross-linked and/or networked polymers, polymers obtainable from di and/or tri-valent repeat units, dendrimers, polymers of different tacticity (e.g. isotactic, syndiotactic or atactic polymers)]; polymorphs (such as interstitial forms, crystalline forms and/or amorphous forms), different phases, solid solutions; and/or combinations thereof and/or mixtures thereof where possible. The present invention comprises and/or uses all such forms which are effective as defined herein.

The layered materials may be swellable that is the distance between adjacent layers may be increased by any suitable means (for example by use of swelling agents which intercalate the material).

Advantageously one or more ingredients other than the polymer precursor may be added to the compositions of the invention to intercalate between the layers to increase the layer separation and reduce the attractive forces between the layers to the point that the individual layer structures can be more easily separated, for example using mechanical shear alone.

Preferably the layered mineral is allowed to swell for a period between half an hour and a few hours to aid break up of agglomerates within the mineral structure, although other well known methods to reduce agglomeration can be also used

Further swelling agents may be added to compositions of the invention, the agent comprising any species capable of intercalating the layered mineral and thereby increasing the distance between the layers. However as the preferred polymers are small species of a low molecular weight (e.g. compared to the thermally cured matrix polymers and emulsion polymers used to prepare prior art thermally cured nanocomposites) additional swelling agent is not essential to incorporate these polymers in a nano-clay to form the radiation curable nanocomposites of the invention;

In a further aspect of the present invention there is provided a process for producing a radiation curable composition which comprises mixing a layered mineral with a radiation curable polymer precursor to form a radiation curable composition comprising the layered mineral.

A still further aspect of the present invention provides a process for producing a radiation curable composition which comprises
dispersing a layered mineral in an carrier medium to form a dispersion;
adding at least one swelling agent and/or a modifying agent;
subsequently adding a radiation curable polymer;
to form a radiation curable composition.

Optionally the composition may be cured by radiation whilst mixing under high shear to form in a single step a polymeric network in which the cured polymer is intercalated between the layered mineral, preferably the mineral is exfoliated.

Another aspect of the invention provides for any composition obtained and/or obtainable by a process of the invention.

A yet further aspect of the present invention provides a method for producing a coated article by coating an article with a radiation curable composition of the invention and thereafter initiating polymerisation of the composition by radiation to form a polymeric coat.

Preferably in the above processes, the composition of the invention comprises a polyol with a acrylic or methacrylic acid which may react (for example in the presence of the dispersion) under esterification conditions to form the radiation curable composition of the invention. The polymer precursors may comprise oligomers having free radical polymerisable double bounds are synthesised following well known processes. The polyols may be esterified with acrylic acid in presence of a acidic catalyst and wherein the water is removed by azeotropic distillation in presence of a solvent.

A yet other aspect of the invention provides for coated articles obtained and/or obtainable by the method of the invention and/or coated by any composition and/or coating of the invention.

Articles of the invention may be rigid, flexible and/or, elastomeric, and comprise for example freestanding films and membranes, which may be flexible and elastomeric, and may be coated as described herein.

In another process of the invention there is provide a method for preparing a radiation curable composition including a nanocomposite material comprising the steps of dispersing an organo modified layered mineral into oligomers having radiation polymerisable (preferably free radial polymerisable) double bonds to form a radiation curable composition including the nanocomposite material.

In compositions of the invention the mineral and the radiation curable resins may be dispersed in a random order with or preferably without use of a suitable diluent. If a solvent is used, it has been found that especially compositions based on diluents such as water, alcohols (ethanol), ethers, esters, ketones (acetone), and combinations thereof, benefit from the invention. It is preferred that the composition is free of organic solvents, more preferably comprises no more than 15% water, most preferably is free of any solvent.

The radiation curable resin may be mixed with or without the diluent and the modified filler, whereafter the whole composition is homogeneously mixed by means of known dispersion techniques, such as mechanical stirring, ultrasound vibration, dispersing, annealing etc.

Depending on the nature of the curing reaction, initiator, additives and pigments can be added to the composition. The initiator content is normally about 0.01 to 10% by weight with respect to the radiation curable resin, preferably between 0.1 and 5% of the to the radiation curable resin. The additive content can range between 0 and 15% by weight of the whole composition, preferably between 0 and 3%. The pigment content can range between 0 and 50% by weight, being preferably between 0 and 25%.

It is also possible to prepare a coating formulation completely, whereafter the modified filler is added. A homogeneous mixture is obtained according to techniques known to those skilled in the art, such as ultrasonically vibrating the whole for, for instance, 30 minutes.

In a still other process, the modified filler can be added at the start of synthesis, during the synthesis or during the work-up of the radiation curable resin. During the synthesis, a solvent can sometimes be used according to techniques known to those skilled in the art.

In another process, for example, the radiation curable composition including a nanocomposite material may be prepared by dispersing a layered mineral in water to form a dispersion, adding a swelling agent to the dispersion, and thereafter initiating the synthesis of the radiation curable resin.

For example, the esterification reaction of a polyol with acrylic or methacrylic acid may be achieved in the presence of the dispersion to form radiation curable composition including the nanocomposite material.

In the processes of the invention, the layered mineral may first be dispersed in a polar solvent by adding from about 0.01 to about 80 grams of mineral to 100 grams of polar solvent and preferably, about 0.1 to about 10.0 g of mineral to 100 g of polar solvent, and then vigorously mixing or shearing the mineral and polar solvent for a time sufficient to disperse the mineral in the polar solvent. Then a hydrocarbyl onium salt may be added to the dispersion, preferably as a solution in polar solvent, and with stirring.

The amount of the onium salt used in the process of the present invention depends on the type of layered material and the oligomer used as well as process conditions. In general, however, the amount of onium salt used will be in the range of the cation co-exchange capacity of the layered mineral to about 10% to about 2,000% of the cationic exchange capacity of the layered mineral.

Next, the radiation curable formulation is formed by adding to the mineral dispersion, the appropriate oligomer. Polymerisation inhibitors can be added to prevent unwanted polymerisation during this process. The blend is typically conducted at a temperature in the range of about 10 °C to about 100°C and for a time sufficient to get intercalation or exfoliation of the layered clay.

The nanocomposite radiation curable composition described above can be used to form coatings or films following standard techniques employed for forming such materials.

In one embodiment of the present invention the nanocomposite radiation curable composition is dispersed with another radiation curable resin by blending and stirring. The amount of the nanocomposite radiation curable composition in the blend will be in the range of about 0.1 to about 70% by weight.

Further, it has been found that the modified filler substantially does not have any adverse effect on curing by radiation of the composition when it has been applied for forming a coating. Polymerisation by UV radiation or EB radiation proceeds with a energy comparable to the energy required for the neat radiation curable resin (without organoclays). The reactivity of the radiation curable resin remains thus substantially unaffected by the presence of the modified filler.

The composition can be used for applying coatings in any way. Suitable application procedures are, for instance, roller coater, curtain coater, spray, screen printing application and the like. After application, if a diluent is used, it is evaporated and a curing takes place by UV or EB radiation. The present composition is suitable for applying coatings to substrates of all kinds

Examples of materials on which the substrate may be based comprise wood, metal, plastic, glass, textile and the like.

The cured coating or film has particularly improved properties, such as improved flame retardancy, improved heat resistance, improved abrasion resistance, scratch resistance, barrier properties, outdoor resistance, mechanical properties and/or combination thereof.

### Examples

The invention will presently be further exemplified by the following non-limiting examples.

Film coatings of the invention were prepared as described below from a known UV curable hydroxy terminal acrylate oligomer (that available from UCB Chemicals under the trade name Ebecryl 40) mixed with a clay obtained commercially from Sud Chemie under the trade name Nanofill 804 (the clay had been modified with an ammonium salt bearing an aliphatic C₁₈ chain and two ethyl ethoxy groups). The compositions were each cured by electron beam, 5 Mrad, 250 kEV, 20 m/min to give a coating of thickness 100 microns. For comparison Comp A denotes the known film coating based on the nanoclay (Nanofill 804) alone.

### Example 1

The clay was weighed in glass vials to which Ebecryl 40 was added as solvent to obtain a 5% dispersion of clay. A preliminary rough mixing was performed using a glass rod. Further mixing was achieved by subjecting the vials to ultrasound at room temperature and pressure (for 4 times over 15 secs each time). The vials were manually shaken between each cycle. The ageing of the sample led to a different amount of precipitated moiety. After settling, the sample was thermally annealed in oven at 60°C for 1 hour leading to a 1 phase system. The composition was then applied as a layer to a substrate and cured to form a film

### Example 2

A clay / Ebecryl 40 mixture (60 g) was prepared as Example 1 except the mixture was mechanically mixed at room temperature and pressure with a small diameter 4 blade propeller stirrer at a stirring speed of 1200 rpm for 85 min. Water was added stepwise in the amount of 30 microliters each time every 5 minutes, for a total volume of 450 microliters and total amount of 15% water in the composition. The composition was then applied as a layer to a substrate and cured to form a film.

When the XRD of films Comp A, Examples 1 and 2 were compared this showed a general loss of the typical reflexes of the clay which indicates the presence of exfoliated clay and a certain percentage of clay as multi- layers intercalated by the polymer chains. The XRD also shows that making the dispersion more stable by adding water (Example 2) reveals no particular differences to the film with respect to the system without water (Example 1).

Thermogravimetric analysis (TGA) on nanocomposites can give insight on the role of the clay in perturbing the combustion profile. In fact, the contribution of the clay can lead to a macroscopic enhance of the charring phenomenon and to a shift of the loss in weight at higher temperatures. Comp A, Example 1 and Example 2 were analysed with TGA using the conventional method with the following parameters: air purge, flow rate = 10 ml/min, start temperature = 35°C; and temperature scan at 15°C/min up to 800°C. The results were displayed as a conventional TGA plot to give both weight % versus temperature and also the derivative of the weight % loss with respect to the time. Onset temperature for the decomposition was calculated from the TGA plots starting from the starting of the weight loss and the maximum of the decomposition rate. The temperature of minimum of the derivative (maximum rate of decomposition) was also calculated.

It was observed for both Examples 1 and 2 that the presence of the clay altered the decomposition profiles of the material compared to a film made from pure Ebecryl 40 (Comp B). While for the Example 1 the shift was not dramatic, for Example 2 (the system with water) the displacement towards higher temperatures was more evident. For Example 1 the onset of the transition was shifted about 6°C, as happens also for the decomposition rate maximum. For Example 2 the shift was about 23°C for the onset and 16°C for the rate maximum (all shifts relative to Comp B).

### Example 3

A further mixture was prepared analogous to Example 1 using a different clays and oligomers. The clay was that obtained commercially from Sud Chemie under the trade name Nanofill 848 and oligomer was HDDA. The mixture was mechanically mixed at room temperature and pressure with a small diameter 4 blade propeller stirrer at a stirring speed of 600 rpm for 1 hour.

The XRD pattern of the resultant film was compared with a film from pure Nanofil 848 (Comp C) and this clearly showed that Example 3 had an exfoliated structure with total loss of crystallinity.

Thus the film coatings of the present invention comprising nanoclay and a UV cured polymer exhibit improved properties compared to films with either nanoclay or polymer alone.

## Claims

**1.** A composite composition comprising a layered mineral and at least one polymer precursor which is substantially miscible therewith;
**characterised in that**:
(i) the polymer precursor is polymerisible by radiation to form a polymeric composition; and/or
(ii) the polymer precursor comprises a polymer obtained and/or obtainable by polymerisation with radiation.

**2.** A composite composition comprising a layered mineral and intercalated therein at least one polymer which is further polymerisable by radiation to form a polymeric network, such as a polymeric coating.

**3.** A composition as claimed in any preceding claim, in which the layered mineral is a natural or synthetic mineral selected from: kaolins, serpentines, talcs, pyrophyllites, ferropyrophyllites; smectites montmorillonites; illites micas glauconites caledonia; chlorites vermiculites; palygorskites; sepiolites; mixed layer minerals which may comprise two three or more mineral components in random and/or regular order; amorphous clays, high alumina clays and/or any suitable mixtures and combinations thereof.

**4.** A composition as claimed in any preceding claim, in which the layered mineral mineral selected from: smectite, montmorillonite, bentonite; beidellite, nontronite, hectrorite, fluorohectorite, saponite, sauconite; volkhonskoite, medmontite, pimelite, stevensite, stephanite; vermiculite, and/or halloysite.

**4.** A composition as claimed in any preceding claim, in which the polymer or polymer precursor is formed from oligomers having free radical polymerisable double bonds.

**5.** A composition as claimed in any preceding claim, in which the polymer or polymer precursor comprises (meth)acrylated oligomers.

**6.** A composition as claimed in any preceding claim, in which the layered mineral comprises nano-layers.

**7.** A composition as claimed in any preceding claim, which the layered mineral is exfolliated.

**8.** A composition as claimed in any preceding claim, in which the layered mineral comprise from about 1% to about 5% by weight of the total composition.
